# NOUVEAU FASCICULE DE BREVET EUROPEEN

(11) **EP 0 682 792 B3**
(45) Date de publication du présent fascicule: **15.06.2011**
(45) Mention de la délivrance du brevet: 22.07.1998
(21) Numéro de dépôt: 94906238.4
(22) Date de dépôt: 03.02.1994
(51) Int. Cl.: G06F 13/38, G06K 7/06

(54) **PROCEDE DE COMMUNICATION AVEC UN SUPPORT PORTATIF**
UEBERTRAGUNGSVERFAHREN MIT EINEM TRAGBAREN TRAEGER
METHOD FOR COMMUNICATING WITH A PORTABLE DATA MEDIUM

(30) Priorité: 04.02.1993 FR 9301235
(43) Date de publication de la demande: 22.11.1995
(73) Titulaire: Gemalto SA, 92190 Meudon (FR)
(72) Inventeur: LEROUX, Jean-Yves, F-13320 Bouc-Bel-Air (FR)
(74) Mandataire: Grevin, Emmanuel
(86) Numéro de dépôt international: PCT/FR1994/000127
(87) Numéro de publication internationale: WO 1994/018628

(56) Documents cités:
- EP-A- 0 259 659
- EP-A- 0 273 136
- GB-A- 2 226 192

## Description

L'invention concerne les supports portatifs tels que les cartes à mémoire de masse ou les cartes à puce de type carte de crédit. Elle s'applique notamment aux microordinateurs.

Les cartes à mémoire de masse amovibles ont fait leur apparition récemment comme accessoires des ordinateurs personnels ou microordinateurs, surtout pour les ordinateurs portables. Elles pourraient remplacer dans l'avenir les disquettes et autres moyens de stockage de masse de type magnétique. Elles peuvent servir de mémoire de masse d'aussi grande capacité que les disquettes magnétiques (ordre de grandeur : le million d'octets) ; leur encombrement n'est pas plus grand puisqu'elles ont le format carte de crédit avec une épaisseur de 3 à 5 millimètres, et elles sont beaucoup plus rapides d'accès (plusieurs milliers de fois plus rapides).

Elles peuvent même servir de mémoire vive de programme directement exécutable par l'ordinateur personnel. Dans ce cas, contrairement aux mémoires de masse magnétiques, elles n'ont pas à être chargées dans la mémoire vive (RAM) du PC pour être exécutées ensuite. Les programmes qu'elle contient sont exécutables directement par l'ordinateur personnel.

Les cartes à mémoire de masse, parfois appelées encore PCcards, comportent plusieurs puces de mémoire et un connecteur en bout de carte (connecteur femelle de 68 broches selon la norme PCMCIA de "Personal Computer Memory Card International Association" 10308 East Duane Avenue, Sunnyvale, California). La carte est enfichable dans un connecteur correspondant (mâle de l'ordinateur). Les connexions sont telles que la mémoire puisse être adressée par un port d'entrée-sortie parallèle du PC, comme si la mémoire était une mémoire de masse magnétique, c'est-à-dire comme si elle était une extension de mémoire vive de l'ordinateur.

Ces cartes enfichables, outre leur fonction de mémoire, peuvent offrir des fonctionnalités supplémentaires, comme par exemple des fonctions de communication. D'autres, qualifiées d'intelligentes, comportent un microprocesseur capable d'exécuter lui-même des programmes contenus en mémoire RAM de la carte. Il est aussi prévu, dans le cas de ces cartes intelligentes, que l'ordinateur puisse charger directement dans une mémoire de la carte des fichiers directement exécutables par le microprocesseur.

L'espace mémoire de ces cartes à mémoire à connecteur en bout est formaté de la même manière que les disquettes magnétiques, selon le système d'exploitation associé au microordinateur Dans un exemple où le système d'exploitation est le système DOS (Disc Operating system) bien connu, l'espace mémoire est ainsi divisé en secteurs ou segments. Et cet espace mémoire est adressé comme celui d'une disquette magnétique : à titre d'exemple l'accès en lecture du 5ème secteur se fait en activant l'interruption DOS de lecture associé, avec comme arguments ce numéro de secteur et le nombre d'octets à lire.

Il est aussi possible d'utiliser des registres de commande d'un microordinateur pour effectuer des accès. On se reportera éventuellement au document "PCMCIA Socket Services Interface Specification" diffusé par "Personal Computer Memory Card International Association" déjà cité.

Un protocole de communication entre ces cartes et un programme applicatif d'un microordinateur permet au microordinateur d'accéder à l'espace mémoire PCMCIA et d'exécuter des commandes de haut niveau : initialisation/ configuration de la carte, lecture/écriture/effacement de données...

Il existe par ailleurs d'autres types de supports portatifs qui sont les cartes à puces à contacts affleurants, largement utilisées dans le grand public pour des applications telles que: cartes téléphoniques, cartes d'accès à des locaux sécurisés, cartes bancaires, etc.,. Ces cartes ne comportent généralement qu'une puce de circuit-intégré (bien qu'il ne soit pas exclu qu'elles en aient plusieurs). Les contacts ne sont plus en bout de carte, mais sur une des faces principales planes de la carte. Les contacts sont peu nombreux, entre six et huit en général. Ces cartes sont beaucoup plus minces que les cartes à mémoire au standard PCMCIA: leur épaisseur est de l'ordre du millimètre, au lieu de 3 à 5 millimètres. Elles sont destinées à être insérées dans des lecteurs spécialisés selon les applications : cabines téléphoniques, portillons d'accès pour les cartes d'accès, distributeurs de billets pour les cartes bancaires, etc. Elles comportent un espace mémoire géré par un microcontrôleur ou un microprocesseur intégré.

Dans certains cas, les cartes à puces peuvent être raccordées à un microordinateur, pour assurer la sécurité d'utilisation de celui-ci. Un lecteur de carte à puce est alors raccordé au microordinateur.

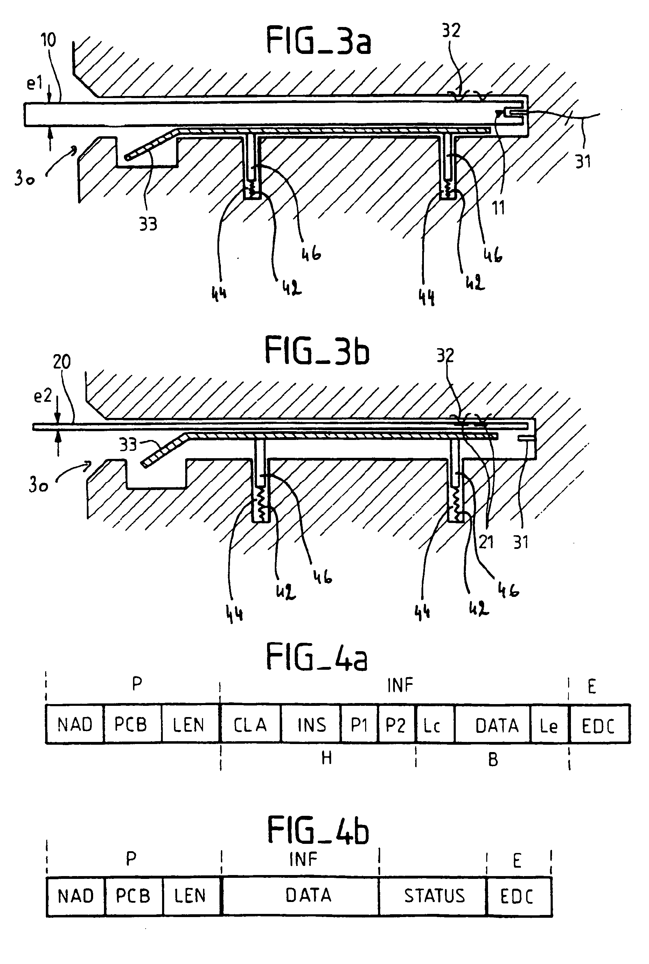

Le protocole de communication entre ces cartes et un programme applicatif d'un microordinateur ou d'une quelconque machine de traitement suit les normes ISO 7816-3 et 7816-4. De manière spécifiée, selon ces normes et comme représenté sur la figure 4a, la structure d'un message de commande avec couche de transport comprend un entête P, un bloc de données INF et une information E de contrôle de transmission ("cheksum" en littérature anglo-saxonne). L'entête P comprend l'adresse NAD du lecteur de la carte à puce, le type PCB de bloc de données (données applicatives, d'acquittements ou de supervisions) et la longueur LEN du bloc de données. Le bloc de données INF est lui-même structuré en un en-tête H, et un corps de message B. L'entête contient la classe de l'instruction (CLA), le code de l'instruction (INS) et l'adresse dans l'espace mémoire de la carte à puce à laquelle on veut accéder (P1, P2). Le corps du message comprend le nombre d'octets (Lc) du message, les octets du message (DATA) et le nombre maximum d'octets (Le) du message attendus dans la réponse.

La classe de l'instruction identifie la structure exacte du message:
- sans corps de message: type 1;
- avec un corps de message comprenant le nombre d'octets (Lc) du message et le message (pas de réponse attendue) : type 2 (par exemple, écriture de données);
- avec un corps de message ne comprenant que le nombre maximum d'octets (Le) du message attendu dans la réponse: type 3 (par exemple, lecture de données);
- avec un corps de message complet : type 4.

Le microordinateur peut ainsi faire exécuter par la carte à puce des commande du type :
- lecture/écrfture/offacement de données dans un fichier élémentaire;
- vérification de signatures électroniques;
- chiffrement, déchiffrement.

En réponse la carte à puce renvoie un message dont la structure de la couche de transport est identique à celle du message de commande, et où le bloc de données INF comprend les octects de la réponse (DATA) et un code d'état (STATUS), le nombre total d'octets du bloc de données étant donné par la longueur LEN dans l'entête P Cette structure du message de réponse est représentée sur la figure 4b.

On a pensé, selon l'invention, qu'il serait utile d'uniformiser les protocoles de dialogue avec les cartes à puces et les cartes de type PCMCIA, afin de faciliter leur usage mixte.

Dans ce but, il a déjà été proposé un lecteur de carte pour microordinateurs qui possède une fente d'insertion de carte et des moyens pour se connecter, soit sur un connecteur en bout de carte à mémoire, soit sur des contacts affleurants d'une carte à puce. Ce lecteur comporte ainsi un premier connecteur placé au fond de la fente d'insertion pour recevoir une carte à mémoire à connecteur en bout et un deuxième connecteur pour cartes à puce à contacts affleurants, placé sur une des faces principales de la fente.

Pour faciliter encore une utilisation généralisée des cartes à puce à contacts affleurants, l'invention propose un procédé de communication qui permet à un microordinateur d'accéder indifféremment à un lecteur de carte à mémoire à connecteur en bout ou à un lecteur de carte à puce à contacts affleurants, sans avoir à se soucier du type de support portatif ainsi accédé.

Selon le procédé de l'invention, un programme applicatif dans le microordinateur utilise un seul protocole de communication entre le programme applicatif et les supports portatifs. Inversement, les messages que le programme applicatif reçoit de ces supports suivent le même protocole de communication, grâce à cette couche de communication.

Un tel procédé permet à un utilisateur d'accéder très facilement aux différents types de cartes, puisqu'il rend'c type transparent pour l'utilisateur.

L'invention a pour objet un procédé de communication selon la revendication 1. La couche de communication met en oeuvre principalement les étapes suivantes, sur réception d'un message du programme applicatif:
- extraction dans le message de l'adresse du lecteur du support;
- détection de présence d'un support à cette adresse et identification du type correspondant;
- dans le cas où le support est du type carte à puce à contacts affleurants ou carte à mémoire intelligente à connecteur en bout, transmission directe du message au support;
- dans le cas où le support est du type carte à mémoire à connecteur en bout, analyse du message et codage pour le rendre compatible avec le support.

D'autres caractéristiques et avantages sont présentés dans la description qui suit à titre indicatif et non limitatif de l'invention, en référence aux dessins et documents annexés dans lesquels :
- la figure 1 est une illustration d'une carte à mémoire à connecteur en bout;
- la figure 2 est une illustration d'une carte à puce à contacts affleurants;
- les figures 3a et 3b représentent un lecteur bistandard dans lequel on introduit
   (a) une carte PCMCIA;
   (b) une carte à puce;
- les figures 4a et 4b représentent respectivement la structure de message de commande et de réponse avec une couche de transport selon les normes ISO 7816-3 et -4 et

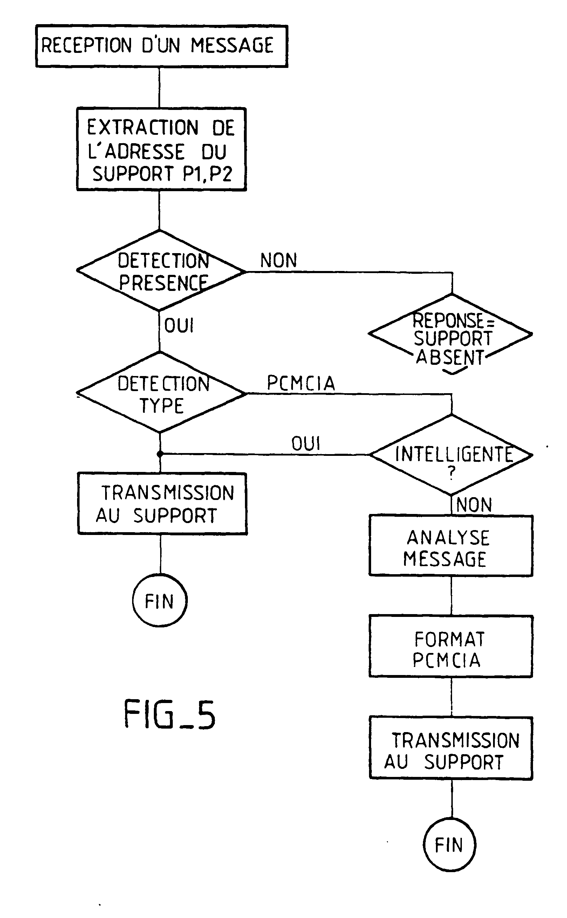

- la figure 5 est un organigramme du procédé selon l'invention.

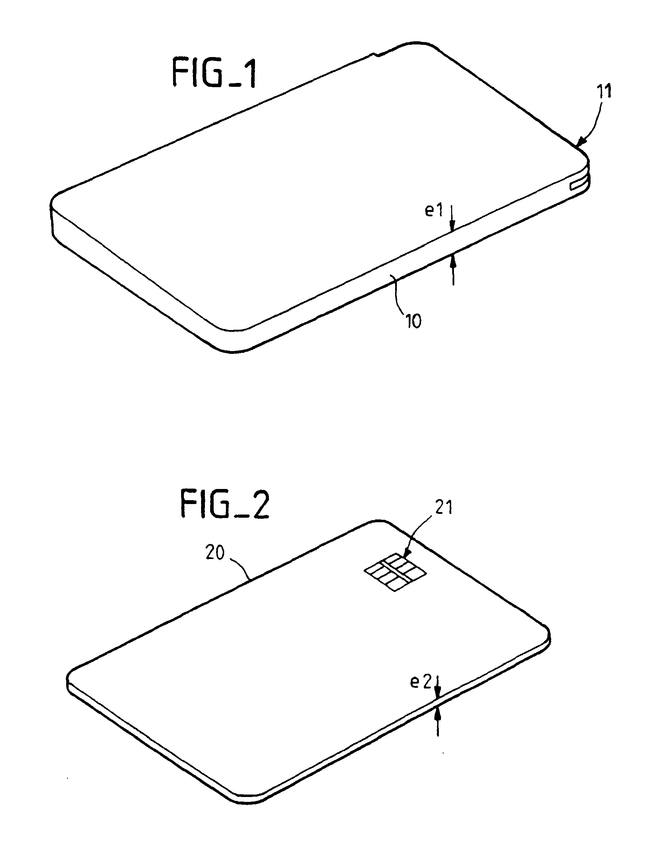

Sur la figure 1, une carte 10 du type PCMCIA est représentée. Cette carte pour microordinateur est enfichable. Elle comporte un connecteur en bout 11. Cette carte à une épaisseur el de l'ordre de 3 à 5 millimètres, pour une largeur d'environ 5cm et une longueur d'environ 8cm. On parlera par la suite de carte PCMCIA.

Sur la figure 2, une carte 20 du type carte à puce est représentée. Son épaisseur e2 est inférieure au millimètre. Cette carte à puce possède un connecteur 21 à contacts affleurants placé sur une des faces principales planes de la carte. Ce connecteur est classiquement constitué d'un petit nombre (en général six à huit) de surfaces de contact individuelles placées côte-à-côte.

Dans le cas de la carte PCMCIA, le contact avec l'extérieur se fait par enfichage de 68 broches mâles dans des logements femelles, comme représenté sur la figure 3a.

Dans le cas de la carte à puce, et comme représenté sur la figure 3b, il se fait par pressions de lames de contact contre les 6 à 8 surfaces de contact individuelles de la carte. Les lames peuvent être en forme de balais venant frotter sur les surfaces de contact du connecteur 21, ou en forme de bossages 32 venant s'appuyer sur ces surfaces.

Un microordinateur ayant les lecteurs appropriés peut ainsi se connecter à des cartes PCMCIA ou à des cartes à puce. Mieux, il peut comporter un lecteur mixte du type représenté sur les figures 3a et 3b, qui peut lire ou bien une carte PCMCIA ou bien une carte à puce. Il possède principalement une fente 30 d'insertion de carte, un premier connecteur 31 au fond de la fente d'insertion pour recevoir une carte à mémoire à connecteur en bout (figure 3a) et un deuxième connecteur 32 pour cartes à puce à contacts affleurants placé sur une des faces principales de la fente (figure 3b). Des moyens mobiles, dans l'exemple à ressort de rappel (42), sont placés à l'intérieur de la fente, pour tendre à pousser une carte à contacts affleurants 20 introduite dans la fente contre le connecteur à contacts affleurants, ces moyens étant repoussés contre leur ressort de rappel lors de l'insertion d'une carte à connecteur en bout 10. La figure 3a représente ainsi une carte à connecteur en bout 10 insérée dans la fente, tandis que la figure 3b représente une carte à contacts affleurants 20 insérée dans la fente. Les moyens mobiles à ressort de rappel comportent, dans l'exemple représenté sur les figures 3a et 3b, un plateau 33 parallèle aux faces principales de la fente, monté sur des piliers 46 qui peuvent s'enfoncer dans des trous borgnes 44 percés dans une des faces principales de la fente, des ressorts de rappel 42 étant prévus pour s'opposer à l'enfoncement des piliers dans les trous borgnes.

Le plateau est de préférence pourvu du coté de l'entrée de la fente, d'une rampe inclinée vers la face principale opposée à celle qui porte le connecteur à contacts affleurants, pour faciliter l'insertion des cartes dans la fente entre le plateau et la face principale qui porte le connecteur à contacts affleurants.

Mais le microordinateur qui veut accéder à ces différents supports portatifs insérés dans des fentes de lecteurs de type carte à puce, PCMCIA ou mixtes, doit utiliser le protocole de communication approprié.

Notamment la carte PCMCIA suit le protocole de communication associé au système d'exploitation du microordinateur, comme toute mémoire de masse. La carte à puce suit elle un protocole spécifique conforme aux normes ISO 7816-3 et 4 déjà décrit en référence aux figures 4a et 4b qui montrent la structure du message de commande et de réponse avec couche de transport selon ces normes.

Dans l'invention, un procédé de communication va permettre au microordinateur de traiter indifféremment ces différents supports portatifs.

Un programme applicatif lancé par le microordinateur utilise selon l'invention un seul protocole de communication avec les supports portatifs. Dans un exemple, c'est le protocole de communication des cartes à puce qui est retenu.

Une couche de communication entre le programme applicatif et un support amovible reçoit les commandes du programme applicatif selon ce protocole de communication.

On rappelle que la structure d'un message de commande répondant aux normes ISO comprend (figure 4-a):
- un entête P contenant notamment l'adresse NAD du lecteur destinataire,
- un bloc de données INF contenant la commande.
- une information E de contrôle de transmission.

La couche de communication selon l'invention met alors en oeuvre les étapes suivantes :
- extraction de l'adresse NAD du lecteur destinataire;
- détection de présence d'une carte à cette adresse;
- si une carte est présente et si elle est du type carte à puces, transmission directe du message de commande au lecteur;
- si une carte est présente et si elle est du type carte PCMCIA, analyse du bloc de données INF contenant la commande pour la mettre au format correspondant.
- si il n'y a pas de carte, renvoi d'un message de réponse : "carte absente" au programme applicatif.

La détection de présence d'une carte ainsi que la détermination de son type peuvent être effectuées par des moyens mécaniques, optiques ou magnétiques. Par exemple un petit contacteur électrique est actionné par la connexion de la carte sur son connecteur.

Si la carte est du type carte PCMCIA, l'analyse de la commande consiste alors à extraire les différentes informations du bloc de données INF (figure 4a) contenant la commande pour en déduire le contenu des différents paramètres de cette commande. Le bloc de données INF est de la forme :

| | | | | | | | |
|---|---|---|---|---|---|---|---|
| | **H** | | | | | **B** | |
| **CLA** | **INS** | **P1** | **P2** | | **Lc** | **DATA** | **Le** |

avec un en-tête H constitué des éléments référencés CLA, INS, P1, P2 et un corps de message B constitué des éléments référencés Lc, DATA, Le
où :

| | |
|---|---|
| CLA : | est le type de l'instruction |
| INS : | est le code de l'instruction |
| P1 P2 : | donnent l'adresse de base de l'élément mémoire où l'on veut accéder |
| Lc : | est le nombre d'octets de l'élément DATA |
| DATA : | sont les données transmises |
| Le : | est le nombre maximum d'octets attendus dans la réponse. |

L'instruction peut être de 4 types (paramètres CLA).

| | |
|---|---|
| Le type 1 | correspond à un message constitué seulement par un entête (exemple d'instruction = initialisation de la carte); |
| Le type 2 | correspond à un message comprenant l'entête et les éléments Lc et DATA (exemple d'instruction: écriture); |
| Le type 3 | correspond à un message comprenant l'entête et l'élément Le (exemple d'instruction : lecture); |
| Le type 4 | correspond au message complet (exemple d'instruction : lecture/écriture). |

Si le support amovible adressé concerne une carte du type PCMCIA, la couche de communication va analyser le message au format ISO pour le traduire au format PCMCIA.

Dans un exemple, pour une commande de lecture, au format ISO, le champ CLA indique que l'instruction est du type 3. Le bloc de donnée INF est constitué par conséquent des champs suivants :

| | | | | | |
|---|---|---|---|---|---|
| | **H** | | | | **B** |
| **CLA** | **INS** | **P1** | **P2** | | **Le** |

Ce sont les paramètres P1, P2 qui donnent au système d'exploitation l'adresse de base de l'élément de mémoire que l'on veut lire et c'est le champ Le qui donne le nombre d'octets à lire.

Les paramètres de la commande PCMCIA correspondante, lorsque par exemple la carte PCMCIA est formatée sous le système DOS sont alors :
le code d'instruction donné par le champ INS,
le numéro de secteur donné par les champs P1, P2,
le nombre d'octets à lire donnés par le champ Le.

Par exemple dans le système d'exploitation DOS, si le code instruction qui se trouve dans le champ INS est le code de lecture, le système exécute la commande de lecture à partir du numéro de secteur donné par P1 et P2 et du nombre d'octets à lire-donné par Le.

En ce qui concerne les réponses, en reprenant l'exemple de l'instruction de lecture, la carte PCMCIA renvoie les Le octets lus et le code d'état.

La couche de communication selon l'invention reçoit donc ces Le octets de réponse de la carte PCMCIA et le code d'état. Elle présente ces Le octets et le code d'état selon le format de réponse avec la couche de transport pour les renvoyer au programme applicatif du microordinateur, soit selon le format suivant :

| | | | | | | | |
|---|---|---|---|---|---|---|---|
| | **P** | | | **INF** | | | **E** |
| **NAD** | **PCB** | **LEN** | | **DATA** | **STATUS** | | **EDC** |

où NAD et PCB sont les mêmes que dans le message de commande et LEN égal à Le : nombre d'octets de la réponse DATA.

Ainsi pour chaque instruction, la couche de communication permet, selon le type d'instruction, d'aller chercher dans les différents champs du bloc de donnée INF de la commande, les informations nécessaires pour que le système d'exploitation du microordinateur puisse exécuter l'instruction qu'il reconnaît.

Dans un autre exemple où on veut effectuer une écriture, la structure du message sera :

| | | | | | | | | | | | | |
|---|---|---|---|---|---|---|---|---|---|---|---|---|
| **P** | | | | | **INF** | | | | | | | **E** |
| **NAD** | **PCB** | **LEN** | | **CLA** | **INS** | **P1** | **P2** | | **Lc** | **DATA** | | **EDC** |

Si l'adresse NAD désigne un lecteur de carte PCMCIA, on extrait du corps du message INF le numéro du secteur à écrire (P1, P2), le nombre de données (Lc) et les données (DATA) à y écrire pour les transmettre à la carte PCMCIA. Celle-ci revoie simplement un code d'état indiquant la bonne opération ou une erreur d'exécution vers la couche de communication de l'invention. Celle-ci présente alors la réponse selon le format requis de réponse avec couche de transport, soit ici :

| | | | | | | |
|---|---|---|---|---|---|---|
| **P** | | | | **INF** | | **E** |
| **NAD** | **PCB** | **LEN** | | **STATUS** | | **EDC** |

où LEN est alors égal au nombre d'octets du code d'état STATUS.

Selon l'invention, quel que soit le type de support amovible utilisé dans le microordinateur, un programme applicatif n'utilise qu'un seul protocole de communication.

Dans le cas où le support amovible est une carte PCMCIA intelligente, on prévoit que le message lui est envoyé directement au format ISO. La détermination du caractère intelligent de la carte PCMCIA se fait alors par exemple par lecture d'une adresse mémoire particulière de la carte PCMIA.

On obtient ainsi avantageusement un seul protocole de communication quel que soit le type de support et quel que soit le type de lecteur dans lequel le support est inséré.

## Revendications

1. Procédé de communication entre une unité de traitement de type microordinateur et des cartes à circuit intégré (10, 20) comme supports d'informations portatifs, chaque carte comportant un connecteur à contact et communiquant avec l'unité de traitement en étant insérée dans un lecteur connecté à l'unité de traitement, l'unité de traitement étant associée à un programme applicatif faisant appel à des fonctions supportées par lesdites cartes, lesdites cartes étant susceptibles d'être de type différent et notamment d'avoir des protocoles de communication différents, **caractérisé en ce qu'**il consiste à ajouter une couche de communication entre le programme applicatif et lesdites cartes, afin de n'utiliser qu'un seul protocole de communication dans le programme applicatif pour accéder aux cartes quel que soit leur type de connecteur et quel que soit le type de lecteur.

2. Procédé de communication selon la revendication 1, **caractérisé en ce que** la couche de communication met en oeuvre les étapes suivantes sur réception d'un message du programme applicatif :
- extraction dans le message de l'adresse (NAD) du lecteur; détection de présence d'une carte à cette adresse et identification du type correspondant;
- dans le cas où la carte est du type carte à puce à contacts affleurants (20) ou carte à mémoire intelligente à connecteur en bout (10), transmission directe du message à la carte;
- dans le cas où la carte est du type carte à mémoire à connecteur en bout (10), analyse du message et codage pour le rendre compatible avec la carte.

3. Procédé de communication selon la revendication 2, **caractérisé en ce que** la couche de communication met en oeuvre les étapes suivantes sur réception d'un message de la carte :
- identification du type de la carte;
- dans le cas où la carte est du type carte à puce à contacts affleurants ou carte à mémoire à connecteur en bout intelligente, transmission directe du message au programme applicatif;
- dans le cas où la carte est du type carte à mémoire à connecteur en bout, analyse du message et codage pour le rendre compatible avec le programme applicatif.

4. Procédé de communication selon la revendication 2 ou la revendication 3, dans lequel le lecteur comporte deux types de connecteur (21, 31) pour lui permettre de recevoir soit une carte à puce à contacts affleurants, soit une carte à mémoire à connecteur en bout, **caractérisé en ce que** la détection de présence consiste à aller lire une information de présence sur chacun des connecteurs, identifiant ainsi le type de la carte qui a été introduite.

5. Procédé de communication selon la revendication 4, **caractérisé en ce que**, lorsque le type identifié est la carte à mémoire à connecteur en bout (10), on effectue une lecture à une adresse particulière de cette carte pour déterminer si cette carte est intelligente ou non.

## Claims

1. A method of communication between a processing unit of the micro-computer type and integrated circuit cards (10, 20) as portable data media, each card comprising a contact connector and communicating with the processing unit being inserted in a reader connected to the processing unit, said processing unit being associated to an application program calling functions carried on said cards, said cards likely to be of differing types and in particular to have differing communication protocols, **characterized in that** it consists in adding a communication layer between the application program and the cards so as to use one communication protocol only in the application program in order to access the cards regardless of the connector type of the cards and regardless of the reader type.

2. A communication method as claimed in claim 1, **characterized in that** the communication layer implements the following steps on receipt of a message from the application program:
- extracting the address (NAD) of the reader from the message; detecting the presence of a card at this address and identifying the corresponding type;
- if the card is of the chip card type with flush contacts (20) or an intelligent memory card having an end-connector (10), direct transmission of the message to the card;
- if the card is of the memory card type having an end connector (10), analysing the message and coding to render it compatible with the card.

3. A communication method as claimed in claim 2, **characterized in that** the communication layer implements the following steps on receipt of a message from the card:
- identification of the type of card;
- if the card is of the chip card type with flush contacts or an intelligent memory card with an end connector, direct transmission of the message to the application program;
- if the card is of the memory card type having an end connector, analyzing the message and coding to render it compatible with the application program.

4. A communication method as claimed in claim 2 or claim 3, in which the reader has two types of connector (21, 31) to allow it to receive either a chip card with flush contacts or a memory card with an end connector, **characterized in that** the process of detecting the presence thereof consists in reading a data item relating to presence at each of the connectors, thereby identifying the type of card that has been inserted.

5. A communication method as claimed in claim 4, **characterized in that** if the type identified is that of the memory card with an end connector (10), a reading procedure is effected at a specific address of this card in order to determine whether this card is intelligent or not.

## Patentansprüche

1. Kommunikationsverfahren zwischen einer Verarbeitungseinheit der Art Mikrocomputer und Karten mit integriertem Schaltkreis (10, 20) als tragbare Informationsträger, wobei jede Karte einen Verbinder mit Kontakt umfasst und mit der Verarbeitungseinheit in Verbindung steht und dabei in ein an die Verarbeitungseinheit angeschlossenes Lesegerät eingefügt ist, wobei die Verarbeitungseinheit einem Anwendungsprogramm zugeordnet ist, das von den genannten Karten unterstützte Funktionen abruft, wobei diese Karten unterschiedlicher Art sein können und insbesondere unterschiedliche Kommunikationsprotokolle aufweisen können, **dadurch gekennzeichnet, dass** es darin besteht, zwischen das Anwendungsprogramm und die genannten Karten eine Kommunikationsschicht hinzuzufügen, damit unabhängig von der Art des Verbinders und unabhängig vom Lesegerät nur ein einziges Kommunikationsprotokoll im Anwendungsprogramm für den Zugriff zu den Karten verwendet wird.

2. Kommunikationsverfahren nach Anspruch 1, **dadurch gekennzeichnet, dass** die Kommunikationsschicht bei Empfang einer Nachricht des Anwendungsprogramms die folgenden Schritte durchführt:
- Auslesen der Adresse (NAD) des Lesegeräts aus der Nachricht; Erfassung des Vorhandenseins einer Karte an dieser Adresse und Identifizierung des entsprechenden Typs;
- wenn die Karte vom Typ Chipkarte (20) mit versenkten Kontakten oder intelligente Speicherkarte (10) mit End-Verbinder ist, direkte Übertragung der Nachricht zur Karte;
- wenn die Karte vom Typ Speicherkarte (10) mit End-Verbinder ist, Analyse der Nachricht und Kodierung, um sie mit der Karte kompatibel zu machen.

3. Kommunikationsverfahren nach Anspruch 2, **dadurch gekennzeichnet, dass** die Kommunikationsschicht bei Empfang einer Nachricht von der Karte die folgenden Schritte durchführt:
- Identifizierung des Typs der Karte,
- wenn die Karte vom Typ Chipkarte mit versenkten Kontakten oder intelligente Speicherkarte mit End-Verbinder ist, direkte Übertragung der Nachricht zum Anwendungsprogramm,
- wenn die Karte von der Art Speicherkarte mit End-Verbinder ist, Analyse der Nachricht und Kodierung, um sie mit dem Anwendungsprogramm kompatibel zu machen.

4. Kommunikationsverfahren nach Anspruch 2 oder 3, bei dem das Lesegerät zwei Arten von Verbinder (21, 31) aufweist, damit es entweder eine Chipkarte mit versenkten Kontakten oder eine Speicherkarte mit End-Verbinder aufnehmen kann, **dadurch gekennzeichnet, dass** die Erfassung des Vorhandenseins darin besteht, eine Vorhandenseinsinformation in jedem der Verbinder zu lesen, wodurch der Typ der Karte identifiziert wird, die eingeführt wurde.

5. Kommunikationsverfahren nach Anspruch 4, **dadurch gekennzeichnet, dass**, wenn der identifizierte Typ die Speicherkarte (10) mit End-Verbinder ist, ein Lesevorgang an einer bestimmten Adresse dieser Karte durchgeführt wird, um zu bestimmen, ob diese Karte intelligent ist oder nicht.
